# EUROPÄISCHE PATENTSCHRIFT

(11) **EP 3 713 758 B1**
(45) Veröffentlichungstag und Bekanntmachung des Hinweises auf die Patenterteilung: **08.09.2021**
(21) Anmeldenummer: 18758877.7
(22) Anmeldetag: 22.08.2018
(51) Int. Cl.: B32B 5/02, B32B 7/12, B32B 7/14, B32B 27/12, B32B 3/08, C09J 7/00, H02G 3/04

(54) **VERFAHREN ZUR HERSTELLUNG EINER UMMANTELUNG FÜR LANGGESTRECKTES GUT**
METHOD FOR PRODUCING SHEATHING FOR AN ELONGATE ITEM
PROCÉDÉ POUR LA FABRICATION D'UNE GAINE POUR UN PRODUIT ALLONGÉ

(30) Priorität: 24.11.2017 DE 102017127893
(43) Veröffentlichungstag der Anmeldung: 30.09.2020
(73) Patentinhaber: Certoplast Technische Klebebänder GmbH, 42285 Wuppertal (DE)
(72) Erfinder: LEERMANN, Timo, 42369 Wuppertal (DE); RAMBUSCH, René, 42113 Wuppertal (DE); RAMBUSCH, Peter, 42115 Wuppertal (DE); HOHMANN, Andreas, 42285 Wuppertal (DE)
(74) Vertreter: Andrejewski - Honke Patent- und Rechtsanwälte Partnerschaft mbB
(86) Internationale Anmeldenummer: PCT/EP2018/072656
(87) Internationale Veröffentlichungsnummer: WO 2019/101378

(56) Entgegenhaltungen:
- WO-A1-2012/048912
- WO-A1-2016/023921
- WO-A1-2016/045890

## Beschreibung

Die Erfindung betrifft ein Verfahren zur Herstellung einer Ummantelung und insbesondere Längsummantelung für langgestrecktes Gut, insbesondere ein Verfahren zur Herstellung einer Umhüllung bzw. Längsumhüllung für Kabelsätze, wonach ein Klebeband aus einem Träger und einer den Träger wenigstens teilweise bedeckenden ersten Klebebeschichtung mit einem klebebeschichtungsfreien Trägerband zu einem Laminat vereinigt wird, wonach ferner der Träger und das Trägerband wenigstens größtenteils überlappen und im Überlappbereich die erste Klebebeschichtung zwischen dem Träger und dem Trägerband vorgesehen ist, und wonach sich die erste Klebebeschichtung im Zwischenraum des Überlappbereichs zwischen dem Träger und dem Trägerband aus mehreren voneinander beabstandeten Klebestreifen zusammensetzt.

Die Herstellung von Ummantelungen und insbesondere Längsummantelungen für langgestrecktes Gut wie beispielsweise Kabelsätze in Automobilen ist mit dem grundsätzlichen Vorteil ausgerüstet, dass auf diese Weise die fraglichen Kabel und Leitungen vor beispielsweise Scheuerbeanspruchungen geschützt werden. Mithilfe einer solchen Ummantelung können nicht nur elektrische Kabel, sondern auch Schläuche und Rohre bandagiert werden und lassen sich sogar Steckverbindungen und teilweise Endgeräte mithilfe der Bandage stützen und zusammenhalten. Dabei wird insgesamt ein minimaler Platzbedarf benötigt. Aus diesem Grund kommen solche Ummantelungen und insbesondere Längsummantelungen bei der Herstellung von insbesondere Kabelbäumen in Automobilen zunehmend zum Einsatz.

Dabei werden ganz unterschiedliche Vorgehensweisen bei der Herstellung solcher Ummantelungen bzw. Längsummantelungen verfolgt. Beispielsweise geht die EP 1 875 573 B1 so vor, dass die Umhüllung aus zwei Klebebändern aufgebaut ist, wobei auf die Umhüllung ein drittes Klebeband aufgebracht wird. Der damit verbundene Herstellungsaufwand ist insofern beträchtlich, als drei Klebebänder bevorratet und zur Herstellung der Ummantelung zugeführt sowie positionsgenau zueinander ausgerichtet werden müssen.

Beim gattungsgemäßen Verfahren entsprechend der WO 2016/023921 A1 wird so vorgegangen, dass zwei jeweils mit einer Klebebeschichtung ausgerüstete Klebebänder axial voneinander beabstandet mithilfe eines klebebeschichtungsfreien Trägerbandes zu einem Laminat vereinigt werden. Die beiden Klebebänder definieren in Längserstreckung einen von ihnen begrenzten Freibereich. Das Trägerband kann zusätzlich noch mit einer Klebebeschichtung zumindest teilweise in dem fraglichen Freibereich nach Herstellen des Laminates ausgerüstet werden. Dadurch soll insgesamt die Produktion vereinfacht und die Kosten reduziert werden können.

Bei einem anderen Verfahren entsprechend der WO 2016/045890 A1 der Anmelderin wird so vorgegangen, dass ein Klebeband aus einem Träger und einer den Träger an seiner Frontseite im Wesentlichen vollflächig bedeckenden ersten Klebebeschichtung mit dem klebebeschichtungsfreien Trägerband zu dem Laminat vereinigt wird. Außerdem ist der Träger des Klebebandes zusätzlich an seiner Rückseite im Wesentlichen teilflächig mit einer weiteren zweiten Klebebeschichtung ausgerüstet.

Auf diese Weise wird bereits eine einfach zu realisierende und kostengünstige Möglichkeit geschaffen, Kabelsätze mithilfe der beschriebenen Ummantelung zu bandagieren und einen signifikanten Schutz gegen mechanische Beschädigungen durch beispielsweise Scheuern und Reiben an scharfen Kanten, Graten und Schweißpunkten zur Verfügung zu stellen. Durch den Rückgriff auf lediglich das Klebeband und das klebebeschichtungsfreie Trägerband wird die Herstellung vereinfacht. An dieser Stelle sind weitere Verbesserungen der Gestalt möglich, dass die anschließende Anbringung der Ummantelung am langgestreckten Gut vereinfacht wird. Hier setzt die Erfindung ein.

Der Erfindung liegt das technische Problem zugrunde, ein Verfahren der eingangs beschriebenen Ausgestaltung so weiterzuentwickeln, dass insbesondere die Anbringung am langgestreckten Gut nochmals vereinfacht ist, und zwar bei insgesamt kostenoptimierten Aufbau.

Zur Lösung dieser technischen Problemstellung ist bei einem gattungsgemäßen Verfahren zur Herstellung einer Ummantelung und insbesondere Längsummantelung für langgestrecktes Gut vorgesehen, dass zusätzlich eine weitere zweite Klebebeschichtung auf das Trägerband auf seine vom Klebeband wegweisende freie Oberfläche aufgebracht wird.
Im Rahmen der Erfindung definieren also der Träger als Bestandteil des Klebebandes und das klebebeschichtungsfreie Trägerband zunächst einmal einen Überlappbereich. Dieser Überlappbereich wird dadurch festgelegt, dass sich der besagte Träger und das Trägerband wenigstens größtenteils überlappen, das heißt so zueinander unter Definition des Überlappbereiches angeordnet werden, dass der jeweils längserstreckte Träger und das längserstreckte Trägerband im Querschnitt über mehr als die Hälfte ihrer jeweiligen Breite übereinander angeordnet sind und folglich den Überlappbereich mit der im Zwischenraum des Überlappbereiches vorgesehenen ersten Klebebeschichtung definieren und beschreiben. Im Regelfall überlappen sich der Träger und das Trägerband nicht nur wenigstens größtenteils, sondern vollständig. Das heißt, der Träger und das Trägerband werden in gemeinsamer Längserstreckung aufeinander laminiert und verfügen über eine gemeinsame Breite, so dass die jeweiligen Längskanten des Trägers und des Trägerbandes übereinander angeordnet sind.

Es ist grundsätzlich aber auch möglich, dass der Träger oder auch das Trägerband seitlich vom Überlappbereich einen Überhang aufweisen. Im Regelfall verzichtet die Erfindung jedoch auf einen solchen Überhang, wenngleich dieser möglich ist.

Vielmehr macht sich die Erfindung zunutze, dass das gebildete Laminat und der Überlappbereich zwischen dem Träger und dem Trägerband mit der zwischengeschalteten ersten Klebebeschichtung insgesamt ein Trägerbandmaterial definieren, welches durch den Rückgriff auf den mehrschichtigen Aufbau und die zwischengestaltete erste Klebebeschichtung einen erhöhten Abriebschutz aufweist.

Tatsächlich verfügt das solchermaßen realisierte Trägerbandmaterial über einen Abriebschutz, der im Regelfall das Eineinhalbfache des Abriebschutzes des Trägers respektive des Trägerbandes alleine übersteigt. Meistens werden sogar Werte beobachtet, die der Summe des jeweiligen Abriebschutzes entspricht oder sogar noch größer ist. Dabei sorgt die Klebebeschichtung in diesem Zusammenhang dafür, dass etwaige mechanische Belastungen oder auch Scheuerbeanspruchungen vom Träger auf das Trägerband abgeleitet werden oder umgekehrt.

Jedenfalls ist das auf diese Weise realisierte Laminat bisherigen Ausführungsformen in diesem Zusammenhang überlegen. Hinzu kommt, dass erfindungsgemäß die erste Klebebeschichtung im Zwischenraum des Überlappbereiches zwischen dem Träger und dem Trägerband aus mehreren voneinander beabstandeten Klebestreifen zusammengesetzt ist. Dadurch wird Material für die realisierte erste Klebebeschichtung gegenüber einer vollflächigen Beschichtung gespart. Dabei hat sich erfindungsgemäß herausgestellt, dass die an dieser Stelle realisierten und voneinander beabstandeten Klebestreifen von ihrer positiven Wirkung zur Erhöhung des Abriebschutzes her nicht von der Maßnahme zu unterscheiden sind, dass die erste Klebebeschichtung vollflächig im Zwischenraum realisiert wird.

Das heißt, insbesondere der Abriebschutz des auf diese Weise definierten und hergestellten Trägerbandmaterials erreicht Werte, die denjenigen entsprechen, wie sie für den Fall beobachtet werden, dass die erste Klebebeschichtung im Zwischenraum vollflächig den Träger und das Trägerband miteinander koppelt. Das alles wird erfindungsgemäß mit zugleich verringerten Kosten erreicht, weil sich herausgestellt hat, dass auch voneinander beabstandete Klebestreifen als erste Klebebeschichtung den praktisch gleichen positiven Effekt einer erhöhten Abriebbeständigkeit liefern.

Hinzu kommt als weiterer Vorteil, dass sich die erfindungsgemäße Ummantelung bzw. Längsummantelung besonders einfach in Längsrichtung um das langgestreckte Gut herum anbringen lässt. Dazu wird die Ummantelung bzw. Längsummantelung meistens in Längsrichtung um das langgestreckte Gut herumgeschlagen, wobei die einzelnen voneinander beabstandeten Klebestreifen der ersten Klebebeschichtung in diesem Zusammenhang den Ummantelungsvorgang erleichtern und damit die Anbringung am langgestreckten Gut.

Das lässt sich im Kern darauf zurückführen, dass das gebildete Laminat im Überlappbereich zwischen dem Träger und dem Trägerband aufgrund der durch die realisierten Klebestreifen gleichsam streifenförmigen Kopplung einzelne "Schaniere" im Querschnitt bildet, die die Längsummantelung bzw. den Längsumschlag der auf diese Weise am langgestreckten Gut angebrachten Ummantelung bzw. Längsummantelung erleichtert. Hierin sind die wesentlichen Vorteile zu sehen.

Nach vorteilhafter Ausgestaltung sind die Klebestreifen der ersten Klebebeschichtung gleich breit ausgelegt. Außerdem wird meistens so vorgegangen, dass die Klebestreifen der ersten Klebebeschichtung äquidistant, das heißt gleicht beabstandet zueinander, auf den Träger aufgebracht werden. Auf diese Weise kann mit beispielsweise einer festen Düsenanordnung für den Auftrag der Klebestreifen der ersten Klebebeschichtung gearbeitet werden. Denn bei dem Klebestreifen handelt es sich vorteilhaft um einen solchen, welcher im Rahmen eines Düsenverfahrens durch Schmelzauftrag eines beispielsweise UV-aushärtenden Acrylatschmelzklebers auf den Träger aufgebracht wird. Selbstverständlich sind natürlich auch andere Verfahren denkbar, um die fraglichen Klebestreifen der ersten Klebebeschichtung auf dem Träger definieren zu können.

Von besonderer erfindungsgemäßer Bedeutung ist dann noch der Umstand, dass zusätzlich die weitere zweite Klebebeschichtung auf das Trägerband auf seine vom Klebeband wegweisende freie Oberfläche aufgebracht wird. Auch die zweite Klebebeschichtung ist vorteilhaft als wenigstens ein Klebestreifen ausgebildet, so dass sowohl für die Realisierung der ersten als auch der zweiten Klebebeschichtung jeweils eine Düsenanordnung zum Einsatz kommen kann und vorteilhaft auch jeweils ein Schmelzkleber für die Realisierung der gewünschten Klebebeschichtung sorgt. Wie im Fall der ersten Klebebeschichtung kann es sich an dieser Stelle um einen UV-aushärtbaren Acrylatkleber handeln, was ebenfalls natürlich nur beispielhaft ist und nicht zwingend.

Da die zweite Klebebeschichtung vorteilhaft ebenfalls als wenigstens ein Klebestreifen ausgebildet ist, hat es sich weiter als besonders günstig erwiesen, wenn sich die zweite Klebebeschichtung aus jeweils an beiden Längsrändern auf das Trägerband aufgebrachten Klebestreifen zusammensetzt. Auf diese Weise ist das Trägerband auf seiner vom Klebeband wegweisenden freien Oberfläche mit zwei Klebestreifen an seinen beiden Längsrändern ausgerüstet. Dadurch kann die auf diese Weise hergestellte Ummantelung mit dem einen Klebestreifen an einem Längsrand zunächst am langgestreckten Gut festgelegt werden. Anschließend wird die Ummantelung um das langgestreckte Gut herum umgeschlagen, so dass der am gegenüberliegenden Längsrand vorhandene weitere Klebestreifen dann für den Verschluss der Ummantelung sorgt. Dazu wird der fragliche Klebestreifen in der Regel auf den Rücken des Trägers des Klebebandes aufgeklebt. Tatsächlich ist der Rücken des Trägers des Klebebandes typischerweise zumindest klebebeschichtungsfrei ausgelegt, so dass die beschriebene Längsumhüllung gelingt.

Es hat sich bewährt, wenn die beiden Klebestreifen der zweiten Klebebeschichtung jeweils gleich breit auf das Trägerband aufgebracht werden. Dazu kann wiederum auf eine einfach aufgebaute Düsenanordnung zurückgegriffen werden, mit deren Hilfe der Schmelzkleber auf das Trägerband aufgebracht wird. In diesem Zusammenhang ist auch die weitere Erfindungsmaßnahme zu sehen, wonach die sämtlichen Klebestreifen eine Breite im Bereich von 5 bis 30 % der Breite des Überlappbereiches aufweisen. Das heißt, die Breite des Klebestreifens, welcher sich jeweils der Längserstreckung des Trägers bzw. des Trägerbandes folgend entlangerstreckt, bemisst sich im Vergleich zur Breite des Überlappbereiches zu den angegebenen Werten im Bereich von 5 % bis 30 %. Besonders bevorzugt werden an dieser Stelle Breiten für die sämtlichen Klebestreifen im Bereich von 10 % bis 25 % bezogen auf die Breite des Überlappbereiches beobachtet. Dadurch können praktisch jeweils gleich aufgebaute Düsen für die Aufbringung des jeweiligen Klebestreifens sorgen und können diese Düsen beispielsweise in einer gemeinsamen Halterung je nach Bedarf im gewünschten Abstand zueinander angebracht und gehalten werden.

Gegenstand der Erfindung ist auch eine Ummantelung und insbesondere Längsummantelung für langgestrecktes Gut, insbesondere eine Umhüllung bzw. Längsumhüllung für Kabelsätze, wie sie im Anspruch 10 beschrieben wird. Die fragliche Ummantelung bzw. Längsummantelung lässt sich vorteilhaft mithilfe des zuvor beschriebenen Herstellungsverfahrens produzieren.

Im Folgenden wird die Erfindung anhand einer lediglich ein Ausführungsbeispiel darstellenden Zeichnung näher erläutert; es zeigen:
- Fig. 1: eine Ummantelung, wie sie nach dem erfindungsgemäßen Verfahren schematisch hergestellt wird und
- Fig. 2: die Ummantelung als Bandage für langgestrecktes Gut schematisch im Schnitt.

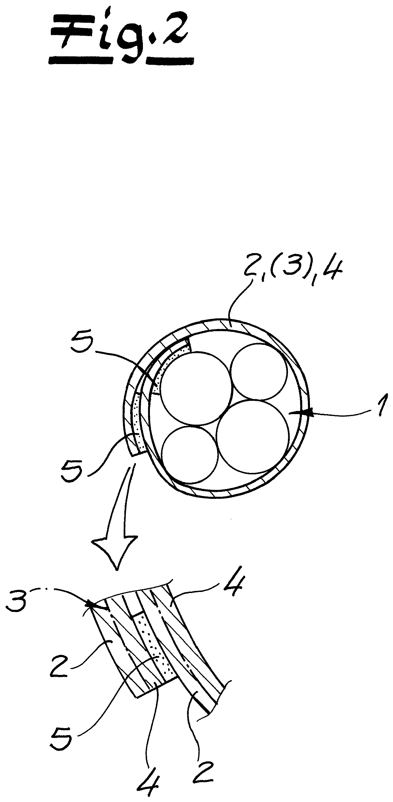

In den Figuren ist zunächst einmal eine Ummantelung bzw. Längsummantelung dargestellt. Mithilfe der Längsummantelung lässt sich langgestrecktes Gut 1 umhüllen bzw. bandagieren, wie dies in der Fig. 2 dargestellt ist. Bei dem langgestreckten Gut 1 handelt es sich beispielhaft und nicht einschränkend um einzelne Kabel bzw. Rohre oder Leitungen im Innern eines Kraftfahrzeuges.

Die fragliche Ummantelung für das langgestreckte Gut 1 ist im Ausführungsbeispiel als Längsumhüllung für Kabelsätze ausgebildet, um die fraglichen Kabelsätze zu bandagieren und auf diese Weise einen Kabelbaum herzustellen oder sonst wie für einen Schutz und eine Zusammenfassung der Kabelsätze zu sorgen.

Um die fragliche Ummantelung bzw. Längsummantelung herzustellen, wird zunächst einmal ein Klebeband 2, 3 produziert. Das Klebeband 2, 3 verfügt über einen Träger 2 und eine den Träger 2 wenigstens teilweise bedeckende erste Klebebeschichtung 3. Bei dem Träger 2 handelt es sich nicht einschränkend im Ausführungsbeispiel um einen Gewebeträger, beispielsweise einen Polyestergewebeträger, der beispielhaft ein Flächengewicht von 50 g/m² bis 500g/m² und insbesondere bis 300 g/m² aufweist oder aufweisen kann.

Grundsätzlich kann anstelle eines Gewebeträgers bzw. Polyestergewebeträgers als Träger 2 auch ein anderer Träger 2 wie beispielsweise eine Folie zum Einsatz kommen.

In der Regel handelt es sich bei dem Träger 2 jedoch um einen textilen Träger. Im beschriebenen und dargestellten Beispielfall ist der textile Träger 2 als Gewebeträger und insbesondere Polyestergewebeträger ausgebildet. Grundsätzlich kann es sich bei dem textilen Träger aber auch um einen Vliesträger handeln. Auch Kombinationen sind denkbar.

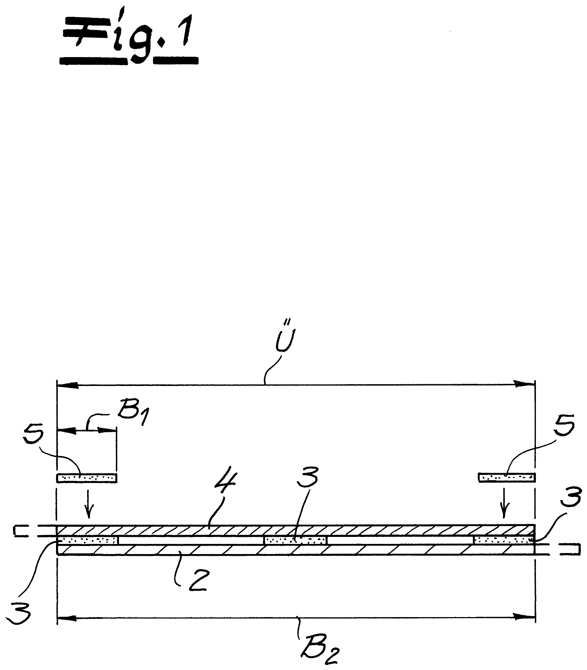

Die erste Klebebeschichtung 3 setzt sich im Ausführungsbeispiel und erfindungsgemäß aus mehreren voneinander beabstandeten Klebestreifen 3 zusammen, wie man in der Fig. 1 erkennt. Die einzelnen Klebestreifen 3 werden zu diesem Zweck auf den längserstreckten und insgesamt im Querschnitt in der Fig. 1 dargestellten Träger 2 in einem Düsenverfahren aufgebracht, wie dies einleitend bereits beschrieben wurde. Das Auftragsgewicht der Klebebeschichtung 3 kann dabei im Bereich von 20 g/m² bis 200 g/m² angesiedelt sein. Bei der Klebebeschichtung 3 bzw. den einzelnen Klebestreifen 3 handelt es sich um solche, die im Regelfall auf Basis eines UV-aushärtbaren Acrylatschmelzklebstoffes auf den Träger 2 aufgebracht werden. Das gilt nur beispielhaft und ist selbstverständlich nicht zwingend.

Das auf diese Weise realisierte Klebeband 2, 3 aus dem Träger 2 und der ersten Klebebeschichtung 3 wird mit einem klebebeschichtungsfreien Trägerband 4 zu einem Laminat 2, 3, 4 vereinigt. Die klebebeschichtungsfreie Auslegung des Trägerbandes 4 meint, dass dieser auf seinen beiden Oberflächen nicht mit einer Klebeschicht ausgerüstet ist, bevor er zu dem fraglichen Laminat 2, 3, 4 mit dem Klebeband 2, 3 vereinigt worden ist. Außerdem drückt die klebebeschichtungsfreie Auslegung des Trägerbandes 4 aus, dass an dieser Stelle keine Klebebeschichtung vorgesehen ist, das Trägerband 4 gleichwohl aber beispielsweise mit einer Kunststoffbeschichtung oder anderweitig ausgerüstet sein kann.

Bei dem Trägerband 4 handelt es sich - vergleichbar wie beim Träger 2 - vorteilhaft um ein textiles Trägerband 4, wenngleich grundsätzlich auch eine Folie oder ein nicht textiles Material zur Realisierung des Trägerbandes 4 zum Einsatz kommen kann. Vorteilhaft ist das Trägerband 4 jedoch als textiles Trägerband 4 ausgebildet. An dieser Stelle hat sich wie beim Träger 2 ein Gewebe als Trägerband 4 und insbesondere ein Polyestergewebe als besonders günstig erwiesen.

Tatsächlich kann man beispielsweise so vorgehen, dass sowohl der Träger 2 als auch das Trägerband 4 aus einem jeweils gleich aufgebauten Polyestergewebe hergestellt sind. Das gilt selbstverständlich nur vorteilhaft und beispielhaft. Jedenfalls werden das Klebeband 2, 3 und das Trägerband 4 zu dem bereits angesprochenen Laminat 2, 3, 4 vereinigt. Das geschieht dergestalt, dass der Träger 2 des Klebebandes 2, 3 und das Trägerband 4 wenigstens größtenteils überlappen und einen in der Fig. 1 angedeuteten Überlappbereich Ü definieren. Im Vergleich zu diesem Überlappbereich Ü, welcher jeweils mehr als die Hälfte der Breite des Trägers 2 ebenso wie des Trägerbandes 4 erfasst, können sowohl der Träger 2 als auch das Trägerband 4 seitlich überstehen und einen jeweiligen Überhang aufweisen, wie er gestrichelt in der Fig. 1 angedeutet ist. Im Regelfall ist ein solcher Überhang jedoch nicht vorgesehen. In diesem Fall weisen der Träger 2 des Klebebandes 2, 3 und das Trägerband 4 eine im Wesentlichen übereinstimmende Breite auf und werden mit ihren jeweiligen Längskanten übereinanderliegend in gemeinsamer Längserstreckung mithilfe der ersten Klebebeschichtung 3 miteinander zu dem Laminat 2, 3, 4 vereinigt.

Im Überlappbereich Ü ist die erste Klebebeschichtung 3 zwischen dem Träger 2 und dem Trägerband 4 vorgesehen. Die erste Klebebeschichtung 3 im Zwischenraum des Überlappbereiches Ü zwischen dem Träger 2 und dem Trägerband 4 setzt sich aus den bereits besprochenen mehreren sowie voneinander beabstandeten Klebestreifen 3 zusammen.

Dabei ist die Auslegung so getroffen, dass die Klebestreifen 3 den gesamten Zwischenraum zwischen dem Träger 2 und dem Trägerband 4 im Querschnitt gesehen ausfüllen. Dadurch werden etwaige am Träger 2 oder auch am Trägerband 4 angreifende mechanische Belastungen von dem Laminat 2, 3, 4 insgesamt aufgenommen. Außerdem kommt es hierdurch zu der einleitend bereits beschriebenen Erhöhung der Abriebfestigkeit des auf diese Weise realisierten Trägerbandmaterials.

Anhand der in der Fig. 1 dargestellten Verfahrensabfolge erkennt man, dass nach der Herstellung des Laminates 2, 3, 4 zusätzlich eine weitere zweite Klebebeschichtung 5 auf das Trägerband 4 aufgebracht wird, und zwar auf seiner vom Klebeband 2, 3 wegweisenden freien Oberfläche. Die zweite Klebebeschichtung 5 ist wie die erste Klebebeschichtung 3 ebenfalls als wenigstens ein Klebestreifen 5 ausgebildet. Tatsächlich erkennt man, dass sich die zweite Klebebeschichtung 5 aus jeweils an beiden Längsrändern auf das Trägerband an der besagten freien Oberfläche aufgebrachten Klebestreifen 5 zusammensetzt.

Die beiden Klebestreifen 5 der zweiten Klebebeschichtung 5 sind jeweils gleich breit auf das Trägerband 4 aufgebracht. Auch die Klebestreifen 3 der ersten Klebebeschichtung 3 verfügen jeweils über eine gleiche Breite. Außerdem sind die Klebestreifen 3 der ersten Klebebeschichtung 3 jeweils gleich beabstandet bzw. äquidistant voneinander beabstandet auf den Träger 2 aufgebracht.

Die sämtlichen Klebestreifen 3, 5 sind insgesamt mit einer Breite B₁ ausgerüstet, die im Ausführungsbeispiel jeweils gleich ausgelegt ist. Dadurch kann für die Herstellung des jeweiligen Klebestreifens 3, 5 auf eine übereinstimmend ausgelegte Düse zum Auftrag des Schmelzklebers zurückgegriffen werden. Das gilt selbstverständlich nur beispielhaft.

In jedem Fall ist die Auslegung so getroffen, dass die sämtlichen Klebestreifen 3, 5 eine Breite B₁ aufweisen, die im Bereich von 5 bis 30 % bezogen auf eine Breite B₂ des Überlappbereiches Ü ausgebildet ist. Ganz besonders bevorzugt liegt die jeweilige Breite B₁ der sämtlichen Klebestreifen 3, 5 im Bereich von 10 % bis 25 % bezogen auf die Breite B₂ des Überlappbereiches Ü.

Anhand der Fig. 2 und der dortigen Schnittdarstellung wird nun deutlich, wie die auf diese Weise realisierte Längsummantelung bzw. Längsumhüllung um das langgestreckte Gut 1 herumgeschlagen wird und die gewünschte Bandage bilden. Tatsächlich wird zu diesem Zweck zunächst einmal die Ummantelung bzw. das spezielle Trägerbandmaterial mithilfe des einen Klebestreifens 5 der zweiten Klebebeschichtung 5 an dem fraglichen langgestreckten Gut 1 festgelegt. Anschließend wird die Ummantelung nach dem Ausführungsbeispiel im Gegenuhrzeigersinn um das langgestreckte Gut 1 herumgeschlagen. Auf diese Weise kommt der zweite Klebestreifen 5 am gegenüberliegenden Längsrand des Trägerbandes 4 in den Bereich des Trägers 2 des Klebebandes 2 und kann an einer Rückseite des Trägers 2 der ersten Klebeschicht 3 gegenüberliegend fixiert werden. Dadurch ist insgesamt die Ummantelung bzw. Längsummantelung als Längsumschlag um das langgestreckte Gut 1 herumgeführt und sorgt für die auf diese Weise realisierte Bandage. Dabei versteht es sich, dass im beschriebenen Beispielfall die Breite B₂ des Überlappbereiches Ü und folglich des Trägerbandmaterials im Ganzen so bemessen ist, dass beim Umschlag das gesamte langgestreckte Gut 1 umhüllt und bandagiert wird.

## Patentansprüche

1. Verfahren zur Herstellung einer Ummantelung für langgestrecktes Gut (1), insbesondere einer Umhüllung für Kabelsätze, wonach
- ein Klebeband (2, 3) aus einem Träger (2) und einer den Träger (2) wenigstens teilweise bedeckenden ersten Klebebeschichtung (3) mit einem klebebeschichtungsfreien Trägerband (4) zu einem Laminat (2, 3, 4) vereinigt wird, wonach ferner
- der Träger (2) und das Trägerband (4) wenigstens größtenteils überlappen und im Überlappbereich (Ü) die erste Klebebeschichtung (3) zwischen dem Träger (2) und dem Trägerband (4) vorgesehen ist, und wonach
- sich die erste Klebebeschichtung (3) im Zwischenraum des Überlappbereiches (Ü) zwischen dem Träger (2) und dem Trägerband (4) aus mehreren voneinander beabstandeten Klebestreifen (3) zusammensetzt.
**dadurch gekennzeichnet, dass**
- zusätzlich eine weitere zweite Klebebeschichtung (5) auf das Trägerband (4) auf seine vom Klebeband (2, 3) wegweisende freie Oberfläche aufgebracht wird.

2. Verfahren nach Anspruch 1, **dadurch gekennzeichnet, dass** die Klebestreifen (3) der ersten Klebebeschichtung (3) gleich breit ausgebildet sind.

3. Verfahren nach Anspruch 1 oder 2, **dadurch gekennzeichnet, dass** die Klebestreifen (3) der ersten Klebebeschichtung (3) äquidistant voneinander beabstandet auf den Träger (2) aufgebracht werden.

4. Verfahren nach nach einem der Ansprüche 1 bis 3, **dadurch gekennzeichnet, dass** die zweite Klebebeschichtung (5) als wenigstens ein Klebestreifen (5) ausgebildet ist.

5. Verfahren nach einem der Ansprüche 1 bis 4, **dadurch gekennzeichnet, dass** sich die zweite Klebebeschichtung (5) aus jeweils an beiden Längsrändern auf das Trägerband (4) aufgebrachten Klebestreifen (5) zusammensetzt.

6. Verfahren nach Anspruch 5, **dadurch gekennzeichnet, dass** die beiden Klebestreifen (5) der zweiten Klebebeschichtung (5) jeweils gleich breit auf das Trägerband (4) aufgebracht werden.

7. Verfahren nach einem der Ansprüche 1 bis 6, **dadurch gekennzeichnet, dass** die sämtlichen Klebestreifen (3, 5) eine Breite (B₁) im Bereich von 5 bis 30 %, insbesondere 10 % bis 25 %, der Breite (B₂) des Überlappbereiches (Ü) aufweisen.

8. Verfahren nach einem der Ansprüche 1 bis 7, **dadurch gekennzeichnet, dass** die Ummantelung in Längsrichtung mit der zweiten Klebebeschichtung (5) am langgestreckten Gut (1) fixiert und dann umgeschlagen wird.

9. Ummantelung, insbesondere Längsummantelung für langgestrecktes Gut(1), vorzugsweise Längsumhüllung für Kabelsätze, welche vorzugsweise nach einem der Ansprüche 1 bis 8 hergestellt wird, mit einem Klebeband (2, 3) aus einem Träger (2) und einer den Träger (2) wenigstens teilweise bedeckenden ersten Klebebeschichtung (3), wobei das Klebeband (2, 3) mit einem klebebeschichtungsfreien Trägerband (4) zu einem Laminat (2, 3, 4) vereinigt ist, wobei ferner der Träger (2) und das Trägerband (4) wenigstens größtenteils überlappen und im Überlappbereich (Ü) die erste Klebebeschichtung (3) zwischen dem Träger (2) und dem Trägerband (4) vorgesehen ist, und wobei sich die erste Klebebeschichtung (3) im Zwischenraum des Überlappbereiches (5) zwischen dem Träger (2) und dem Trägerband (4) aus mehreren voneinander beabstandeten Klebestreifen (3) zusammensetzt
**dadurch gekennzeichnet, dass**
zusätzlich eine weitere zweite Klebebeschichtung (5) auf das Trägerband (4) auf seiner vom Klebeband (2, 3) wegweisenden freien Oberfläche aufgebracht ist.

## Claims

1. A method for producing a sheath for elongate material (1), in particular a sleeve for cable sets, according to which
- an adhesive tape (2, 3) comprising a carrier (2) and a first adhesive coating (3) at least partially covering the carrier (2) is combined with a carrier tape (4) which is free from adhesive coating to form a laminate (2, 3, 4), further according to which
- the carrier (2) and the carrier tape (4) at least for the most part overlap, and the first adhesive coating (3) is provided in the overlap region (U) between the carrier (2) and the carrier tape (4), and according to which
- in the space of the overlap region (U) between the carrier (2) and the carrier tape (4) the first adhesive coating (3) consists of a plurality of adhesive strips (3) spaced apart from each other,
**characterized in that**
- a further, second adhesive coating (5) is also applied to the free surface of the carrier tape (4) facing away from the adhesive tape (2, 3).

2. The method according to Claim 1, **characterized in that** the adhesive strips (3) of the first adhesive coating (3) have the same width.

3. The method according to Claim 1 or 2, **characterized in that** the adhesive strips (3) of the first adhesive coating (3) are applied to the carrier (2) equidistantly from each other.

4. The method according to any one of Claims 1 to 3, **characterized in that** the second adhesive coating (5) is in the form of at least one adhesive strip (5).

5. The method according to any one of Claims 1 to 4, **characterized in that** the second adhesive coating (5) consists of adhesive strips (5) which are each applied to the two longitudinal edges of the carrier tape (4).

6. The method according to Claim 5, **characterized in that** the two adhesive strips (5) of the second adhesive coating (5) are each applied with the same width to the carrier tape (4).

7. The method according to any one of Claims 1 to 6, **characterized in that** all of the adhesive strips (3, 5) have a width (B₁) in the range from 5 to 30 %, in particular 10 % to 25 %, of the width (B₂) of the overlap region (Ü).

8. The method according to any one of Claims 1 to 7, **characterized in that** the sheath is fixed in the longitudinal direction on the elongate material (1) with the second adhesive coating (5) and then wrapped around.

9. A sheath, in particular a longitudinal sheath for elongate material (1), preferably a longitudinal sleeve for cable sets, which is preferably produced according to any one of Claims 1 to 8, having an adhesive tape (2, 3) comprising a carrier (2) and a first adhesive coating (3) which at least partially covers the carrier (2), wherein the adhesive tape (2, 3) is combined with a carrier tape (4) which is free from adhesive coating to form a laminate (2, 3, 4), wherein further the carrier (2) and the carrier tape (4) overlap at least for the most part, and the first adhesive coating (3) is provided in the overlap region (U) between the carrier (2) and the carrier tape (4), and wherein in the space of the overlap region (5) between the carrier (2) and the carrier tape (4) the first adhesive coating (3) consists of a plurality of adhesive strips (3) spaced apart from each other,
**characterized in that**
a further, second adhesive coating (5) is also applied to the carrier tape (4) on the surface thereof facing away from the adhesive tape (2, 3).

## Revendications

1. Procédé de fabrication d'une enveloppe pour produit long (1), en particulier d'une enveloppe pour jeux de câbles, selon lequel
- une bande adhésive (2, 3) composée d'un support (2) et d'un premier revêtement adhésif (3) recouvrant au moins en partie le support (2) est réunie à une bande porteuse sans revêtement adhésif (4) en un produit laminé (2, 3, 4), selon lequel en outre
- le support (2) et la bande porteuse (4) se chevauchent au moins en grande partie et le premier revêtement adhésif (3) est prévu dans la zone de chevauchement (Ü) entre le support (2) et la bande porteuse (4) et selon lequel
- le premier revêtement adhésif (3) se compose dans l'espace intermédiaire de la zone de chevauchement (Ü) entre le support (2) et la bande porteuse (4) de plusieurs rubans adhésifs (3) à distance l'un de l'autre,
**caractérisé en ce qu'**
- un autre deuxième revêtement adhésif (5) sur la bande porteuse (4) est appliqué en plus sur sa surface libre opposée à la bande adhésive (2, 3).

2. Procédé selon la revendication 1, **caractérisé en ce que** les rubans adhésifs (3) du premier revêtement adhésif (3) sont constitués de la même largeur.

3. Procédé selon la revendication 1 ou 2, **caractérisé en ce que** les rubans adhésifs (3) du premier revêtement adhésif (3) sont appliqués sur le support (2) éloignés à équidistance l'un de l'autre.

4. Procédé selon l'une quelconque des revendications 1 à 3, **caractérisé en ce que** le deuxième revêtement adhésif (5) est constitué sous la forme d'au moins un ruban adhésif (5).

5. Procédé selon l'une quelconque des revendications 1 à 4, **caractérisé en ce que** le deuxième revêtement adhésif (5) est composé de rubans adhésifs (5) appliqués respectivement sur les deux bords longitudinaux sur la bande porteuse (4).

6. Procédé selon la revendication 5, **caractérisé en ce que** les deux rubans adhésifs (5) du deuxième revêtement adhésif (5) sont respectivement appliqués sur une même largeur sur la bande porteuse (4).

7. Procédé selon l'une quelconque des revendications 1 à 6, **caractérisé en ce que** tous les rubans adhésifs (3, 5) comportent une largeur (B₁) dans 5 à 30 %, en particulier 10 % à 25 %, de la largeur (B₂) de la zone de chevauchement (Ü).

8. Procédé selon l'une quelconque des revendications 1 à 7, **caractérisé en ce que** l'enrobage dans le sens longitudinal est fixé avec le deuxième revêtement adhésif (5) sur le produit long (1) et ensuite rabattu.

9. Enrobage, en particulier enrobage longitudinal pour un produit long (1), de préférence enveloppe longitudinale pour jeux de câbles, lequel est fabriqué de préférence selon l'une quelconque des revendications 1 à 8, avec une bande adhésive (2, 3)composée d'un support (2) et d'un premier revêtement adhésif (3) recouvrant au moins en partie le support (2), sachant que la bande adhésive (2, 3) est réunie à une bande porteuse (4) exempte de revêtement adhésif en un produit stratifié (2, 3, 4), sachant en outre que le support (2) et la bande porteuse (4) se chevauchent au moins en grande partie et le premier revêtement adhésif (3) est prévu dans la zone de chevauchement (Ü) entre le support (2) et la bande porteuse (4) et sachant que le premier revêtement adhésif (3) se compose dans l'espace intermédiaire de la zone de chevauchement (5) entre le support (2) et la bande porteuse (4) de plusieurs rubans adhésifs (3) à distance l'un de l'autre,
**caractérisé en ce qu'**
un autre deuxième revêtement adhésif (5) sur la bande porteuse (4) est appliqué en plus sur sa surface libre opposée à la bande adhésive (2, 3).
